Europäisches Patentamt

European Patent Office

Office européen des brevets

(19)

(11) Veröffentlichungsnummer: **0 178 390 B1**

## EUROPÄISCHE PATENTSCHRIFT

(12)

(45) Veröffentlichungstag der Patentschrift: **09.09.92**

(51) Int. Cl.5: **G02B 6/38**, G02B 6/42

(21) Anmeldenummer: **85108971.4**

(22) Anmeldetag: **18.07.85**

(54) **Verfahren zum Koppeln optischer Bauelemente und Anordnung zur Durchführung des Verfahrens.**

(30) Priorität: **14.09.84 DE 3433717**

(43) Veröffentlichungstag der Anmeldung:
**23.04.86 Patentblatt 86/17**

(45) Bekanntmachung des Hinweises auf die
Patenterteilung:
**09.09.92 Patentblatt 92/37**

(84) Benannte Vertragsstaaten:
**DE FR GB IT NL**

(56) Entgegenhaltungen:
**DE-U- 7 415 907**
**FR-A- 2 547 661**
**US-A- 4 237 474**

**PATENT ABSTRACTS OF JAPAN, Band 4, Nr.**
**15 (E-170), 5. Februar 1980, Seite 45 E 170; &**
**JP - A - 54 155 850 (NIPPON DENSHIN DEN-**
**WA KOSHA) 08.12.1979**

**PATENT ABSTRACTS OF JAPAN, Band 6, Nr.**
**92 (P-119)[970], 29. Mai 1982; & JP - A - 57**
**29021 (FUJITSU K.K.) 16.02.1982**

(73) Patentinhaber: **Licentia Patent-**
**Verwaltungs-GmbH**
**Theodor-Stern-Kai 1**
**W-6000 Frankfurt/Main 70(DE)**

(72) Erfinder: **Pfeiffer, Eugen, Ing. (grad.)**
**Talstrasse 9**
**W-7901 Staig(DE)**
Erfinder: **Staudigel, Lothar, Ing. (grad.)**
**Friesenweg 35**
**W-7910 Neu-Ulm 4(DE)**
Erfinder: **Weidel, Edgar, Dipl.-Phys.**
**Hudlerstrasse 25**
**W-7913 Senden(DE)**

(74) Vertreter: **Schulze, Harald Rudolf, Dipl.-Ing. et**
**al**
**Licentia Patent-Verwaltungs-GmbH Theodor-**
**Stern-Kai 1**
**W-6000 Frankfurt/Main 70(DE)**

**Beschreibung**

Die Erfindung betrifft ein Verfahren zum Koppeln optischer und/oder elektrooptischer Bauelemente und eine Anordnung zur Durchführung des Verfahrens.

Insbesondere für die optische Nachrichtenübertragung ist es erforderlich, optische Bauelemente zu koppeln. Bei einer beispielhaft gewählten Teilnehmerstation einer optischen Nachrichtenübertragungsstrecke mit einem Glasfaser-Lichtwellenleiter ist es erforderlich, einen elektrooptischen Sender, z. B. einen Halbleiterlaser, und/oder einen optoelektrischen Empfänger, z. B. eine Halbleiter-Fotodiode, mit einem Lichtwellenleiter zu koppeln. Dabei sollen optische Koppelverluste vermieden werden, die beispielsweise durch eine ungenügende Justierung der optischen Bauelemente enstehen.

In der Druckschrift G. Khoe et al.:Progress in Monomode Optical Fiber Interconnection Devices, Journal of Lightwave Technology, Vol. LT-2, 1984, Seiten 217 bis 227 sind mehrere Anordnungen beschrieben zum Koppeln der optischen Bauelemente.

Bei den dort beschriebenen Anordnungen werden für die optischen Bauelemente häufig zylindersymmetrische Halterungen verwendet. Diese haben zwar in vorteilhafter Weise eine gute Stabilität gegenüber Temperaturänderungen und mechanische Schwingungen und mechanische Schockbeanspruchung, besitzen jedoch den Nachteil, daß keine optische Beobachtung der Koppelstelle möglich ist und somit die Justierung erschwert wird. Zur gegenseitigen Befestigung der verwendeten Bauteile werden in nachteiliger Weise häufig Kleber verwendet. Diese besitzen eine relativ lange Aushärtezeit, auch die sogenannten schnellhärtenden Kleber, die insbesondere eine kostengünstige Massenproduktion verhindert. Weiterhin ist Langzeitstabilität von Klebverbindungen unsicher, denn durch Altern und/oder Quellen des Klebers entstehen Änderungen, die insbesondere bei kleinen Fertigungstoleranzen zu unwirtschaftlichen Ausschüssen führen können. Eine zum Kleben alternative Methode ist die Kaltverschweißung unter Benutzung eines weichen Metalls, z.B. Indium. Zur Herstellung einer haltbaren kaltverschweißten Verbindung ist es erforderlich, diese weichen Metalle mit sehr hohen Kräften zu pressen. Dadurch treten möglicherweise störende Verformungen auf, die ein Einhalten besonders kleiner mechanischer Toleranzen erschweren oder sogar verhindern.

In der US-A 42 37 474 ist eine Anordnung zum Koppeln einer Leuchtdiode mit einer optischen Faser beschrieben, in welcher die Leuchtdiode und die optische Faser auf getrennten Trägerkörpern vormantiert sind und unter Zuhilfenahme eines dritten Körpers in eine zur Kopplung optimale gegenseitige Position verschoben und in dieser festgelegt werden. Die Körper weisen ebene Flächen auf, entlang derer die Verschiebung in die optimale Koppelposition erfolgt. Zwischen einander gegenüberliegende solche Verschiebungsflächen ist jeweils eine dünne Schicht aus UV-härtbarem Harz aufgebracht, die auch ihre Viskosität ein Verschieben der Körper gegeneinander ermöglicht und nach Erreichen der Endposition durch UV-Bestrählung aushärtet und die erreichte gegenseitige Lage festlegt.

Zur Befestigung einer Lichtleitfaser auf einem Trägerkörper ist es aus JP-A 57-29021 und aus JP-A 54-155850, die Lichtleitfaser und die für die Befestigung vorgesehene Trägerfläche metallisch zu beschichten und in einer gewünschten Faserposition die Metallschichten durch Löten bzw. Bonden zu verbinden.

Bei einer beispielhaft gewählten optischen Kopplung eines Halbleiterlaser an einen (Quarzglas-)Monomode-Lichtwellenleiter, dessen Ende konvex-linsenförmig ausgebildet ist, ist für einen möglichst hohen optischen Koppelwirkungsgrad in Längsrichtung des Lichtwellenleiters für den Abstand Halbleiterlaser-Lichtwellenleiter eine Toleranz von 1 $\mu$m bis 3 $\mu$m zulässig. Für die Abweichung von der optischen Achse ist dagegen, senkrecht zur Längsachse des Lichtwellenleiters, lediglich eine Toleranz von 0,2 $\mu$m bis 0,5 $\mu$m zulässig.

Der Erfindung liegt die Aufgabe zugrunde ein gattungsgemäßes Verfahren und eine gattungsgemäße Anordnung anzugeben, die insbesondere bei einer kostengünstig durchführbaren Massenproduktion eine hochgenaue, langzeitstabile sowie zuverlässige Justierung der optischen Bauelemente ermöglichen.

Diese Aufgabe wird gelöst durch die in den kennzeichnenden Teilen der Patentansprüche 1 und 6 angegebenen Merkmale. Zweckmäßige Ausgestaltungen und Weiterbildungen sind den Unteransprüchen entnehmbar.

Die Erfindung wird im folgenden anhand von Ausführungsbeispielen näher erläutert unter Bezugnahme auf eine schematische Zeichnung.

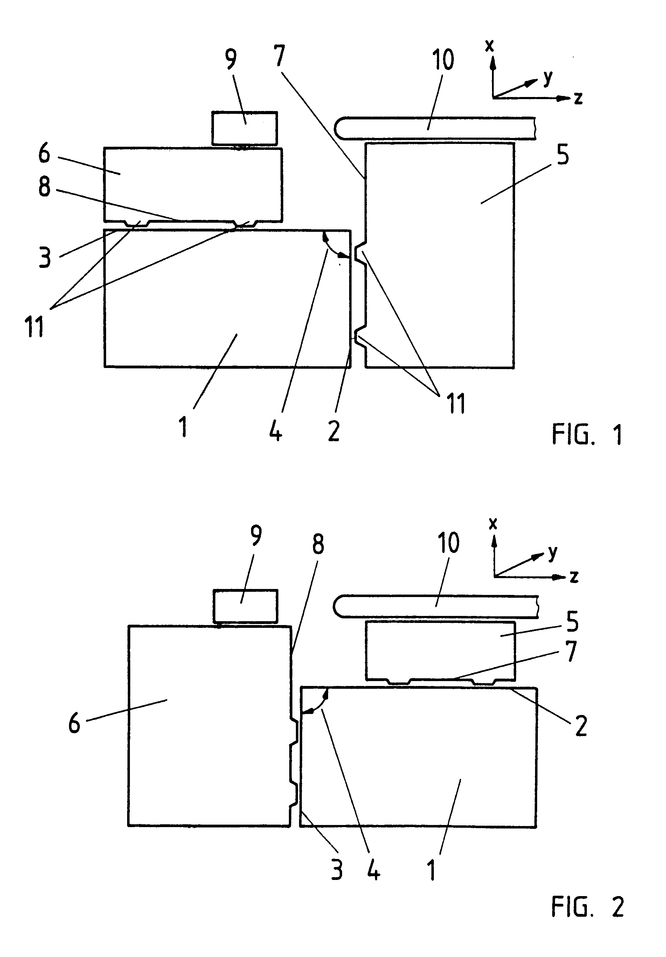

Die Figuren 1 und 2 zeigen Querschnitte durch zwei unterschiedliche Ausführungsbeispiele.

Die Figuren 1 und 2 zeigen als optische Bauelemente einen (Quarzglas-)Monomode-Lichtwellenleiter 10, der einen lichtführenden Kern mit einem Durchmesser von ungefähr 9$\mu$m sowie einen diesen umhüllenden (Glas-)Mantel mit einem Außendurchmesser von ungefähr 120$\mu$m besitzt und dessen Ende konvex-linsenförmig ausgebildet ist. Ein beispielhaft gewählter Halbleiterlaser 9 soll unter Einhaltung der eingangs erwähnten mechanischen Toleranzen derart angeordnet werden, daß ein möglichst hoher Koppelwirkungsgrad erreicht wird. Dazu werden die Bauelemente 9, 10 zunächst einzeln auf verschiedenen Trägerkörpern 5, 6 befestigt, z.B. durch Kleben und/oder eine metallische Gefügeverbindung. Mit dem Begriff "metallische Gefügeverbindung" werden im Rahmen dieser Erfindung die Verbindungsverfahren elektrischen und/oder thermischen Schweißen, Löten sowie Bonden erfaßt. Dabei ist eine Vorjustierung möglich z.B. mit Hilfe von Vertiefungen, die in die Trägerkörper eingeprägt sind. Die Trägerkörper 5, 6 besitzen außerdem ebene Flächen 7,8 die eine hochgenaue optische Justierung der Bauelemente 9, 10 zueinander ermöglichen. In dem Ausführungsbeispiel gemäß Fig. 1 ist die ebene Fläche 7 des Trägerkörpers 5 im wesentlichen senkrecht zur Längsachse des Lichtwellenleiters 10 angeordnet, während die ebene Fläche 8 des Trägerkörpers 6 im wesentlichen parallel zur Längsachse des Lichtwellenleiters 10 angeordnet ist. In dem Ausführungsbeispiel gemäß FIG. 2 ist dagegen eine umgekehrte Anordnung der ebenen Flächen 7, 8 vorhanden.

Die optischen Bauelemente 9, 10 werden nun dadurch zueinander justiert, daß die zugehörigen Trägerkörper 5, 6 mit ihren ebenen Flächen 7, 8 auf einer ebenen ersten Fläche 2sowie einer ebenen zweiten Fläche 3 eines Grundkörpers 1 verschoben werden. Anschließend werden Trägerkörper und Grundkörper durch elektrisches Widerstandsschweißen, Löten oder Bonden miteinander verbunden. Dazu ist es zweckmäßig, auf den ebenen Flächen 2 und/oder 3 und/oder 7 und/oder 8 sogenannte Verbindungswarzen 11 auszubilden. Dieses sind Erhebungen von ungefähr 1mm Durchmesser und ungefähr 0,1mm Dicke. Diese Verbindungswarzen werden zweckmäßigerweise durch einen mechanischen Prägevorgang aus den entsprechenden ebenen Flächen erzeugt. Die Verbindungswarzen 11 bewirken, daß eine feste Verbindung an genau bestimmbaren Stellen zustande kommt. Es ist weiterhin zweckmäßig, auf den ebenen Flächen 2 und/oder 3 und/oder 7 und/oder 8 zumindest im Bereich der Verbindungswarzen 11 auf dem Grundkörper 1 und/oder den Trägerkörpern 5, 6 zunächst eine elektrisch schlecht leitende Widerstandsschicht abzuscheiden. Diese enthält z.B. die Metalle Chrom und/oder Nickel und besitzt eine Dicke von ungefähr 10$\mu$m bis 20$\mu$m. Auf die Widerstandsschicht wird anschließend eine Verbindungsschicht aufgebracht, die z.B. die Metalle Gold und/oder Nickel enthält.

Wird zum Verbinden der Trägerkörper 5, 6 an den Grundkörper 1 das elektrische Widerstandsschweißen gewählt, so wird durch diese Schichtenfolge erreich, daß bei elektrisch gut leitenden Grund- sowie Trägerkörpern, die z.B. aus Kupfer bestehen, lediglich im Bereich der Verbindungswarzen 11 eine feste Verbindung entsteht. Dadurch werden insbesondere mechanische Verzüge des Grundkörpers und/oder der Trägerkörper vermieden.

Es ist vorteilhaft, den erwähnten Justiervorgang dort zu beginnen, wo die größten Abweichungen zulässig sind. Bei einer Anordnung gemäß FIG. 1 wird dazu zunächst der Trägerkörper 6 - mit dem darauf befestigten Halbleiterlaser 9 - in z-Richtung auf der zweiten Fläche 3 verschoben, justiert und befestigt. Denn in z-Richtung ist die eingangs erwähnte relativ große Toleranz von 1$\mu$m bis 3$\mu$m zulässig. Anschließend wird der Trägerkörper 5 - mit dem darauf befestigten Lichtwellenleiter 10 - in x, y-Richtungen auf der ersten Fläche 2 verschoben, justiert und befestigt. Dabei ist die eingangs erwähnte relativ kleine Toleranz von 0,1$\mu$m bis 0,5$\mu$m zulässig. Zur sehr genauen Justierung der Anordnung ist es möglich, während des Justiervorganges Licht aus dem Halbleiterlaser 9 in den Lichtwellenleiter 10 einzukoppeln und dadurch die Anordnung so zu justieren, daß ein größtmöglicher optischer Koppelwirkungsgrad erreicht wird.

Bei der Anordnung gemäß FIG. 2 wird der Justiervorgang in einer entsprechenden Weise durchgeführt.

Für eine kostengünstige Massenproduktion ist es vorteilhaft, Grundkörper sowie Trägerkörper zunächst als gleichartige Körper auszubilden, z.B. als Kupfer-Quader mit einer Länge von ungefähr 6mm, einer Breite von ungefähr 4mm sowie einer Höhe von ungefähr 4mm. Aus diesen Quadern werden dann durch mechanische Prägevorgänge die ebenen Flächen mit den Verbindungswarzen erzeugt sowie Nuten und/oder Vertiefungen für eine Vorjustierung der optischen Bauelemente. Widerstandsschicht sowie Verbindungsschicht werden beispielsweise durch Aufdampfen im Vakuum und/oder galvanisch aufgebracht.

Die Erfindung ist nicht auf die beschriebenen Ausführungsbeispiele beschränkt, sondern sinngemäß auf weitere anwendbar. Beispielsweise ist es möglich, als optische Bauelemente Linsen und/oder Filter zu verwenden und diese mit Hilfe der Trägerkörper und Grundkörper zueinander zu justieren und zu befestigen.

**Patentansprüche**

1. Verfahren zum Koppeln optischer und/oder elektrooptischer Bauelemente (9,10), bei dem die Bauelemente zunächst einzeln auf Trägerkörpern (5,6) befestigt und mittels dieser relativ zueinander und zu einem Grundkörper (1) entlang zweier einen Winkel von im wesentlichen 90° einschließender ebener Flächen (2,3) des Grundkörpers verschoben und auschließend zueinander ausgerichtet werden, und bei dem die Trägerkörper nach Verschieben in eine Endposition in ihrer relativen Lage durch feste Verbindungen zwischen den sich gegenüberstehenden ebenen Flachen der Trägerkörper und des Grundkörpers festgelegt werden, dadurch gekennzeichnet,

- daß auf den ebenen Flächen der Trägerkörper und/oder des Grundkörpers Verbindungswarzen (11) erzeugt werden und
- daß die festen Verbindungen als metallische Gefügeverbindungen nur im Bereich der Verbindungswarzen hergestellt werden.

2. Verfahren zum Koppeln von Bauelementen nach Anspruch 1, dadurch gekennzeichnet, daß für die metallische Gefügeverbindung ein elektrisches Widerstandsschweißen verwendet wird, daß der Grundkörper (1) sowie die Trägerkörper (5, 6) aus einem elektrisch gut leitfähigen Material bestehen und daß auf dem Grundkörper (1) und/oder den Trägerkörpern (5,6) zumindest an den zu verbindenden Stellen zunächst eine elektrisch schlecht leitende Widerstandsschicht aufgebracht wird, die durch eine Verbindungsschicht überdeckt wird.

3. Verfahren zum Koppeln von Bauelementen nach Anspruch 2, dadurch gekennzeichnet, daß für das gut leitfähige Material ein kupferhaltiges Material gewählt wird, daß für die Widerstandsschicht ein Nickel- und/oder Chromhaltiges Material gewählt wird und daß die Verbindungsschicht Gold enthält.

4. Verfahren zum Koppeln von Bauelementen nach einem der vorhergeheden Ansprüche, dadurch gekennzeichnet, daß für die metallische Gefügeverbindung ein thermisches Schweißen und/oder Löten und/oder Bonden verwendet wird.

5. Verfahren zum Koppeln von Bauelementen nach einem der vorhergehenden Ansprüche, dadurch gekennzeichnet, daß mindestens eines der Bauelemente (9;10) auf einem der Trägerkörper (5,6) durch eine metallische Gefügeverbindung befestigt wird.

6. Anordnung zur Durchführung des Verfahrens nach einem der vorhergehenden Ansprüche, dadurch gekennzeichnet, daß auf den einander gegenüberstehenden ebenen Flächen der Trägerkörper und/oder des Grundkörpers mehrere aus den Flächen herausragende Verbindungswarzen vorhanden sind.

7. Anordnung nach Anspruch 6 wenn rückbezogen auf Anspruch 2, dadurch gekennzeichnet, daß zumindest die Verbindungswarzen (11) von der Widerstandsschicht und der Verbindungsschicht bedeckt sind.

8. Anordnung nach Anspruch 6 oder Anspruch 7, dadurch gekennzeichnet, daß die zu koppelnden optischen Bauelemente aus einem Lichtwellenleiter sowie einem Halbleiterbauelement bestehen.

9. Anordnung nach Anspruch 8, dadurch gekennzeichnet, daß der Lichtwellenleiter als Monomodelichtwellenleiter ausgebildet ist und daß das Halbleiterbauelement einen elektrooptischen Sender und/oder einen elektrooptischen Empfänger enthält.

10. Anordnung nach einem der Ansprüche 6 bis 9, dadurch gekennzeichnet, daß zumindest die Verbindungswarzen (11) und/oder die ebenen Flächen (2,3,7,8) durch einen Prägevorgang entstanden sind.

**Claims**

1. Method for the coupling of optical and/or electro-optical components (9, 10), in which the components are initially individually fastened on carrier bodies (5, 6) and are displaced by means of these relative to one another and to a base body (1) along two planar surfaces (2, 3), which include an angle of substantially 90°, and are subsequently aligned relative to one another, and in which the two carrier bodies are fastened in their relative locations, after displacement into an end position by fixed connections between the mutually opposite planar surfaces of the carrier bodies and of the base body, characterised thereby that connecting protrusions (11) are created on the planar surfaces of the carrier bodies and/or of the base body and that the fixed connections are produced as metallic structure connections only in the region of the connecting protrusions.

2. Method for the coupling of components according to claim 1, characterised thereby that an electric resistance welding is used for the metallic structure welding, that the base body (1) as well as the carrier bodies (5, 6) consist of a material with good electrical conductivity and that initially a resistance layer of low electrical conductivity is brought onto the base body (1) and/or the carrier bodies (5, 6) at least at the places to be connected, which layer is covered by a connecting layer.

3. Method for the coupling of components according to claim 2, characterised thereby, that a material containing copper is selected for the material with good conductivity, that a material containing nickel and/or chromium is selected for the resistance layer and that the connecting layer contains gold.

4. Method for the coupling of components according to one of the preceding claims, characterised thereby that a thermal welding and/or soldering and/or bonding is used for the metallic structure connection.

5. Method for the coupling of components according to one of the preceding claims, characterised thereby that at least one of the components (9; 10) is fastened on one of the carrier bodies (5, 6) by a metallic structure connection.

6. Arrangement for the carrying out of the method according to one of the preceding claims, characterised thereby that present on the mutually opposite planar surfaces of the carrier bodies and/or of the base body are several connecting protrusions projecting from the surfaces.

7. Arrangements according to claim 6 when dependent on claim 2, characterised thereby that at least the connecting protrusions (11) are covered by the resistance layer and the connecting layer.

8. Arrangement according to claim 6 or claim 7, characterised thereby that the optical components to be coupled consist of a light wave conductor as well as a semiconductor component.

9. Arrangement according to claim 8, characterised thereby that the light wave conductor is constructed as a mono-mode light wave condcutor and that the semiconductor component contains an electro-optical transmitter and/or an electro-optical receiver.

10. Arrangement according to one of the claims 6 to 9, characterised thereby that at least the connecting protrusions (11) and/or the planar surfaces (2, 3, 7, 8) are produced by a stamping process.

**Revendications**

1. Procédé de couplage de composants optiques et/ou électro-optiques (9, 10), dans lequel lesdits composants sont d'abord fixés individuellement sur des corps-supports (5, 6) puis, au moyen de ceux-ci, sont déplacés l'un par rapport à l'autre et par rapport à un corps de base (1), le long de deux surfaces planes (2, 3) dudit corps de base, lesquelles forment entre elles un angle valant sensiblement 90°, et sont ensuite orientés l'un par rapport à l'autre, et les deux corps-supports après avoir été amenés à une position finale sont immobilisés dans leur position relative par des assemblages définitifs entre les surfaces planes mutuellement en regard des corps-supports et du corps de base, caractérisé par le fait
   - que des boutons d'assemblages (11) sont réalisés sur les surfaces planes des corps-supports et/ou du corps de base, et
   - que les assemblages définitifs, réalisés en tant que liaisons structurelles métalliques intimes, ne sont établis que dans la région des boutons d'assemblage.

2. Procédé de couplage de composants optiques selon revendication 1, caractérisé par le fait que, pour la liaison structurelle métallique intime, on utilise un soudage électrique par résistance, par le fait que le corps de base (1) ainsi que les corpssupports (5, 6) sont en un matériau bon conducteur de l'électricité, et par le fait que l'on applique d'abord, sur le corps de base (1) et/ou sur les corps-supports (5, 6), au moins aux endroits à assembler, une couche résistante mauvaise conductrice de l'électricité, que l'on recouvre d'une couche de liaison.

3. Procédé de couplage de composants selon revendication 2, caractérisé par le fait que l'on adopte, pour le matériau bon conducteur de l'électricité, un matériau contenant du cuivre, par le fait que l'on adopte pour la couche résistante un matériau contenant du nickel et/ou du chrome, et par le fait que la couche de liaison contient de l'or.

4. Procédé de couplage de composants selon l'une des revendications précédentes, caractérisé par le fait que l'on utilise pour la liaison structurelle métallique intime un soudage thermique et/ou un soudage tendre et/ou un procédé de bonding.

5. Procédé de couplage de composants selon l'une des revendications précédentes, caractérisé par le fait qu'au moins l'un des composants (9, 10) est fixé sur l'un des corps-supports (5, 6) par une liaison structurelle métallique intime.

**6.** Agencement de mise en oeuvre du procédé selon l'une des revendications précédentes, caractérisé par le fait que plusieurs boutons d'assemblage en saillie sur les surfaces sont présents sur les surfaces planes tournées l'une vers l'autre des corps-supports et/ou du corps de base.

**7.** Agencement selon revendication 6 avec rattachement à la revendication 2, caractérisé par le fait qu'au moins les boutons d'assemblage (11) sont recouverts par la couche résistante et par la couche de liaison.

**8.** Agencement selon revendications 6 ou 7, caractérisé par le fait que les composants optiques à coupler sont constitués par un guide d'ondes lumineuses ainsi que par un composant à semiconducteur.

**9.** Agencement selon revendication 8, caractérisé par le fait que le guide d'ondes lumineuses est réalisé en tant que guide d'ondes lumineuses unimodal, et par le fait que le composant à semiconducteur comporte un émetteur électro-optique et/ou un récepteur optoélectrique.

**10.** Agencement selon l'une des revendications 6 à 9, caractérisé par le fait qu'au moins les boutons d'assemblage (11) et/ou les surfaces planes (2, 3, 7, 8) résultent d'un processus de refoulement.

FIG. 1

FIG. 2